Europäisches Patentamt

European Patent Office

Office européen des brevets

(11) Veröffentlichungsnummer : **0 075 260**
**B1**

(12) **EUROPÄISCHE PATENTSCHRIFT**

(45) Veröffentlichungstag der Patentschrift :
**15.05.85**

(51) Int. Cl.⁴ : **G 02 C   3/00**

(21) Anmeldenummer : **82108484.5**

(22) Anmeldetag : **15.09.82**

(54) **Brillengestell mit Sicherungsband.**

(30) Priorität : **19.09.81 DE 8127522 U**
**06.02.82 DE 8203188 U**

(43) Veröffentlichungstag der Anmeldung :
**30.03.83 Patentblatt 83/13**

(45) Bekanntmachung des Hinweises auf die Patenterteilung : **15.05.85 Patentblatt 85/20**

(84) Benannte Vertragsstaaten :
**AT CH DE FR GB IT LI NL SE**

(56) Entgegenhaltungen :
**DE-A- 2 118 358**
**FR-A- 1 080 633**
**US-A- 2 798 409**
**US-A- 3 728 012**

(73) Patentinhaber : **Dr. Eugen Beck KG**
**Am Mackenberg**
**D-4740 Oelde 1 (DE)**

(72) Erfinder : **Beck, Rainer, Dipl.-Ing.**
**Am Mackenberg**
**D-4740 Oelde 1 (DE)**
Erfinder : **Schulte, Alfons**
**Am Wiesenborn 2**
**D-4720 Beckum (DE)**

(74) Vertreter : **Meldau, Gustav, Dipl.-Ing. et al**
**Vennstrasse 9**
**D-4830 Gütersloh 1 (DE)**

EP 0 075 260 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Brillengestell mit an dessen Bügeln angreifendem, abnehmbaren, elastischen Sicherungsband, wobei jeder der beiden Bügel im Bereich des ohrseitigen Bügelendes bzw. der ohrendenseitigen Verstärkung Befestigungsmittel für das als elastische Schnur ausgebildete Sicherungsband aufweist.

Bei vielen Gelegenheiten verlangt das Tragen einer Brille eine Brillensicherung. Dies liegt auf der Hand bei Sportlern, die bei der Ausübung ihres Sports Erschütterungen ausgesetzt sind. Hierbei kann eine Brille sich lösen und verlorengehen, wenn sie sich im Laufe der Tragzeit verformt hat und nicht mehr ordnungsgemäß sitzt. Für einen Segler oder einen Surfer etwa, dessen Brille z. B. beim harten Einsetzen in die Welle verloren und über Borg geht, bedeutet dies — soweit er nicht auf eine Ersatzbrille zurückgreifen kann — eine erhebliche Gefährdung, da eine für ihn notwendige Sehstärkenkorrektur nicht mehr vorhanden ist oder — bei Sonnenbrillen — Blendung eintritt. Ähnliches gilt für Bergsteiger und Reiter oder für andere Sportler, die — wie etwa Tennisspieler — bei der Ausübung ihres Sports heftigen Körperbewegungen ausgesetzt sind. Analoges gilt naturgemäß auch für spielende Kinder. Darüber hinaus können rutschende Brillen die berufliche Tätigkeit eines Brillenträgers in unerwünschter Weise beeinflussen, wenn der Brillenträger bei seiner Tätigkeit auf das Erkennen feinster Strukturen angewiesen ist. Typisch dafür ist der am Operationstisch in gebückter Haltung tätige Chirurg : das Nachschieben einer rutschenden Brille kann Sterilitätsverlust zur Folge haben. Eine sich lösende oder abfallende Brille würde darüber hinaus noch eine zusätzliche Infektionsgefahr für den Patienten bedeuten. Aber auch bei anderen Tätigkeiten ist eine rutschende Brille, die immer wieder in ihre richtige Position geschoben werden muß, hinderlich. Um das Rutschen oder das Lösen von Brillen zu verhindern ist es bekannt, Brillensicherungsbänder zu verwenden, die an den Bügeln des Brillengestellts angreifen. Dabei werden Schlaufen um die Bügel gelegt und das Sicherungsband um den Hinterkopf gespannt. Eine Längenverstellung des Sicherungsbandes ist dabei vorgesehen. Nach einer anderen Konstruktion werden halbmondförmige, mit einem Schlitz versehene Gleitschuhe auf die Bügel des Brillengestells geschoben, wobei das Sicherungsband von Gleitschuh zu Gleitschuh um den Hinterkopf gespannt ist. Ein Längenausgleich erfolgt durch Verschiebung der Gleitschuhe. Keine dieser beiden Sicherungsvorrichtungen läßt sich unauffällig am Brillengestell anbringen. Darüber hinaus sitzen die Schlaufen oder auch die Aufsteckschuhe nicht in jedem Falle fest auf den Büglen, ein selbsttätiges Lösen kann die Folge sein. Schließlich ist nicht auszuschließen, daß die Schlaufen oder die Aufsteckschuhe auf der Haut aufliegen und zu Druck- oder Reibstellen führen.

Aus der DE-OS 21 18 358 ist ein gattungsgemäßes Brillengestell vorbekannt, bei dem ein im wesentlichen als Schnur ausgebildetes Sicherungsband von einem Bügelende zum anderen geführt ist und das Bügelband mit Verstärkungsaufnahmen zusammenwirkenden Verstärkungen versehen ist, wobei jedes Ende Verstärkungen im Abstand voneinander angeordnet aufweist und an jedem Bügelende eine zur Verstärkungsaufnahme führende Nut vorgesehen ist, in die die zwischen den Verstärkungen vorhandenen Stege des Sicherungsbandes eingeklemmt sind. In einer anderen Ausführungsform sind zwei zueinander parallele Nuten, eine auf der Bügelaußenseite und eine auf der Bügeloberseite vorgesehen, wobei die Verstärkungsaufnahme zum Führen des in beide Nuten eingeklemmten Sicherungsbandes dient. Dabei ist die Weite jeder der Nuten kleiner als der Durchmesser des Sicherungsbandes, so daß die Klemmwirkung vergrößert wird. Zum Ändern der Weite des Sicherungsbandes ist es bei beiden Ausführungsformen notwendig, das Sicherungsband zumindest einseitig voll zu lösen, die neue Weite einzustellen und das Sicherungsband nach kräftigem Dehnen im Einklemmbereich, wobei sich sein Durchmesser da entsprechend verringert, in die Nuten einzuführen und zu verklemmen. Dies kann regelmäßig nicht geschehen, wenn die Brille in Position ist.

Daraus ergibt sich die der Erfindung zu Grunde liegende Aufgabe, nach der gattungsgemäße Brillengestelle so weitergebildet werden sollen, daß die Längenänderung des Sicherungsbandes in einfacher Weise erfolgen kann, das Sicherungsband in seinen Befestigungen leicht gleitet und die Brille mit dem Brillengestell sowohl lose als auch fest tragbar ist, wobei die Befestigung des Sicherungsbandes unauffällig bzw. in ästhetisch befriedigender Weise ausgeführt sein soll.

Nach der Erfindung wird diese Aufgabe dadurch gelöst, daß das Befestigungsmittel als im wesentlichen in Bügel-Längsrichtung verlaufende Bohrung ausgebildet ist, wobei die von der die Austrittsfläche durchdringenden Bohrung erzeugte Öffnung mindestens im zweiten Bügel Tropfenform mit etwa parallel zur Bügel-Längsrichtung verlaufender Längsachse und zum Ohrende des Bügels weisender Spitze aufweist und daß das Sicherungsband eine zum Ohrende des Bügels hin geöffnete, im wesentlichen U-förmige Schlaufe bildend mit einem Ende durch die Bohrung mit dem Scheitel des U in der Spitze der Öffnung verklemmbar geführt ist.

In einer Weiterbildung wird vorgeschlagen, daß die Bohrung mit einer Hülse, vorzugsweise einer Metallhülse versehen ist. Durch diese Ausführung ergibt sich eine überraschend einfache Lösung der gestellten Aufgabe : Die mit Bohrungen im Bereich der ohrseitigen Bügelenden versehenen Bügel werden durch das durch die Bohrungen geführte Sicherungsband verbunden, das über den Hinterkopf gespannt wird. Dabei ist das an dem einen Bügel durch die Endverstärkung festgelegte Sicherungsband mit dem anderen Ende selbsthemmend durch die Bohrung des zweiten Bügels geführt. Die Bandlänge kann dabei in einfacher Weise durch mehr oder weniger starkes Durchziehen des Sicherungsbandes eingestellt werden. Die Verkürzung der Bandlänge gelingt auf jeden Fall auch bei aufgesetzter Brille, da die Klemmung in der Spitze der Bohrung beim Ziehen des Sicherungsbandes in Richtung « Verkürzen » automatisch aufgehoben wird und das Verkürzen sogar einhändig durchgeführt werden kann. Ein Verlängern des Bandes bei aufgesetzter Brille ist im allgemeinen überflüssig, da die Nachgiebigkeit des Sicherungsbandes aufgrund seiner Elastizität hinreichend ist. Jedoch kann auch eine Verlängerung bei aufgesetzter Brille einhändig erfolgen, da die Zugkraft des dann gespannten Sicherungsbandes ausreichend ist, um nach Aufheben der Klemmung das in der Bohrung gleitende Sicherungsband rutschen zu lassen. Bei der Weiterbildung ist die Bohrung mit einer Metallhülse versehen, die ein Ausbrechen der Klemmspitze, die im allgemeinen aus Kunststoff besteht, vermeidet und die das Gleiten des Kunststoffbandes begünstigt.

Eine bevorzugte Ausführungsform ist dadurch gegeben, daß jeder der beiden Bügel des Brillengestells im Bereich der ohrseitigen Enden einen auf der Seitenfläche des Ohrbügelendes angeordnete Warze aufweist, wobei die Warze mit der Bohrung versehen ist, deren dem Brillengestelle zugewandtes Ende klemmend mit dem Sicherungsband zusammenwirkt. Weiter wird vorgeschlagen, daß die Warze der Kopf einer in den Ohrteil eines jeden Bügels eingelassenen Niete, Schraube o. dgl. ist. Durch diese Ausbildung des Ohrbügels gelingt es mit einereinzige, die Niete, Schraube o. dgl. aufnehmenden Bohrung im Ohrbügel die Warze am Ohrbügel herzustellen, wobei die Warze bereits in der Vorfertigung die für die Durchführung des Sicherungsbandes notwendige Bohrung erhalten hat, deren Ausrichtung in einer im wesentlichen in Langsrichtung des Bügels verlaufenden Achsrichtung beim Einsetzen geschieht.

Darüber hinaus wird vorgeschlagen, daß der mit dem Sicherungsband zusammenwirkende Lochrand der das Sicherungsband aufnehmenden Bohrung einen etwa V-förmigen Querschnitt aufweist. Alternativ dazu wird vorgeschlagen, daß der klemmend mit dem Sicherungsband zusammenwirkende Lochrand der das Sicherungsband aufnehmenden Bohrung eine schlüssellochähnliche Form aufweist. Schließlich wird vorgeschlagen, daß die Oberfläche der in den Ohrbügel eingesetzten Warze als Schmuckfacette ausgbildet ist.

Die Ausbildung des Lochrandes für die das Sicherungsband aufnehmende Bohrung in dem in Ohrbügel einzusetzende Warze kann ebenfalls in einfacher Weise in der Vorfertigung hergestellt werden. Dadurch wird bei dieser Ausführungsform die Herstellung der das Sicherungsband aufnehmenden Bohrung völlig von der Fertigung des Rohrbügels getrennt und unabhängig davon durchgeführt. Die eingesetzte Warze enthält dann die das Sicherungsband aufnehmende Bohrung mit der das Sicherungsband klemmend festlegenden Randausbildung. Das Ausbilden des Einsatzes als Verzierung trägt modischen Belangen dadurch Rechnung, daß durch entsprechende Gestaltung der Oberfläche des Einsatzes eine Schmuckwirkung erreicht wird.

Bezüglich des Sicherungsbandes wird nach der Erfindung vorgeschlagen, daß eine das freie Ende des Sicherungsbandes versteifende Spitze vorgesehen ist. Die Auswechselbarkeit des Sicherungsbandes, die ansich schon dadurch gegeben ist, daß das Sicherungsband lediglich einseitig mit einer Endverstärkung versehen ist, wird durch diesen Vorschlag wesentlich verbessert, da zum Einfädeln des als Schnur ausgebildeten Sicherungsbandes die versteifte Spitze benutzt wird.

Weiter wird vorgeschlagen, daß die versteifende Spitze als das Ende des Sicherungsbandes übergreifende Hülse, insbesondere als metallene Klemmhülse ausgebildet ist. Das Aufsetzen einer derartigen Hülse auf das eine Ende des Sicherungsbandes bietet die Möglichkeit dessen Spitze zu versteifen. Bei der Verwendung von Kunststoffhülsen ist es möglich diese Hülsen, beispielsweise aufzuschrumpfen oder durch Wärmefixierung auf den von ihr übergriffenen Ende des Sicherungsbandes zu befestigen. Metallene Klemmhülsen lassen sich vorteilhaft für diesen Zweck einsetzen, da sie wirtschaftlich auf das Sicherungsbandende aufgeklemmt werden können.

Darüber hinaus wird vorgeschlagen, daß eine das freie Ende des Sicherungsbandes aufnehmende Schlaufe vorgesehen ist. Diese Schlaufe ist dann vorteilhaft, wenn die Länge des Sicherungsbandes für erhebliche Längenverstellung eingerichtet ist. Dies ist dann der Fall, wenn die Brille lose und fest getragen werden soll. Dabei kann in loser Stellung des Sicherungsbandes die Brille auch um den Hals gehängt sein, die Festlegung des freien Endes des Sicherungsbandes durch die Schlaufe erzwingt immer die selbstklemmende Führung.

Eine besondere Ausführungsform ist dadurch gekennzeichnet, daß die Schlaufe auf dem zwischen beiden Rügeln verlaufenden Teil des Sicherungsbandes angeordnet ist. Eine andere Ausführungsform ist dadurch gekennzeichnet, daß die Schlaufe auf dem 2. Rügel auf der dem ohrseitigen Bügelende abgewandten Seite der Schrägbohrung angeordnet ist. Beide Ausführungsformen stehen alternativ nebeneinander ; die erste Ausführungsform ist dann vorzuziehen, wenn die Schrägbohrung eine Klemmwirkung in der Form ergibt, daß das im wesentlichen zum Obrende hin gerichtete Teilstück des Sicherungshandes geklemmt wird, das freie und lose Ende wird dann mit Hilfe der Schlaufe an das den Hinterkopf umschligende Teil des Sicherungsbandes gezogen. Die zweite Ausführungsform ist dann von Bedeutung, wenn die Schrägbohrung als im wesentlichen zum ohrseitigen Ende des Bügels gerichtetes schräge Sackloch ausgebildet ist und die klemmende Wirkung sowohl an der Kante der Austrittsöffnung des Sackloches als auch an der Kante des übergangs der weiteren Bohrung in das Sackloch dann klemmt, wenn das freie Ende des Sicherungsbandes in Bügelrichtung vom Ohrende weg gerichtet gelegt ist.

Die Figuren 1-8 beschreiben das Wesen der Erfindung beispielhaft. Dabei bedeutet

Figur 1 eine perspektivische Darstellung eines Brillengestells mit Sicherungsband

Figur 2 das ohrseitige Ende eines Bügels des Brillengestells mit Schrägbohrung

Figur 3 das Endteil eines Ohrstücks mit Schrägbohrung geschnitten

Figur 4 Aufsicht auf das Endteil des Ohrstücks gemäß Fig. 3

Figur 5 Schrägbohrung an dem Ohrstück einer Metallbügelbrille, die Bohrung dem ohrseitigen Ende abgewandt

Figur 6 Schrägbohrung am ohrseitigen Ende der Verstärkung eines Bügels

Figur 7 ein Brillengestell mit durch eingesetzte Vorsprünge geführtem Sicherungsband

Figur 8 Ausbildung des Klemmrandes (9a : Klemmrand als Dreieck ; 9b : Klemmrand schlüssellochähnlich)

Figur 9 Vorsprung in stärkerer Vergrößerung.

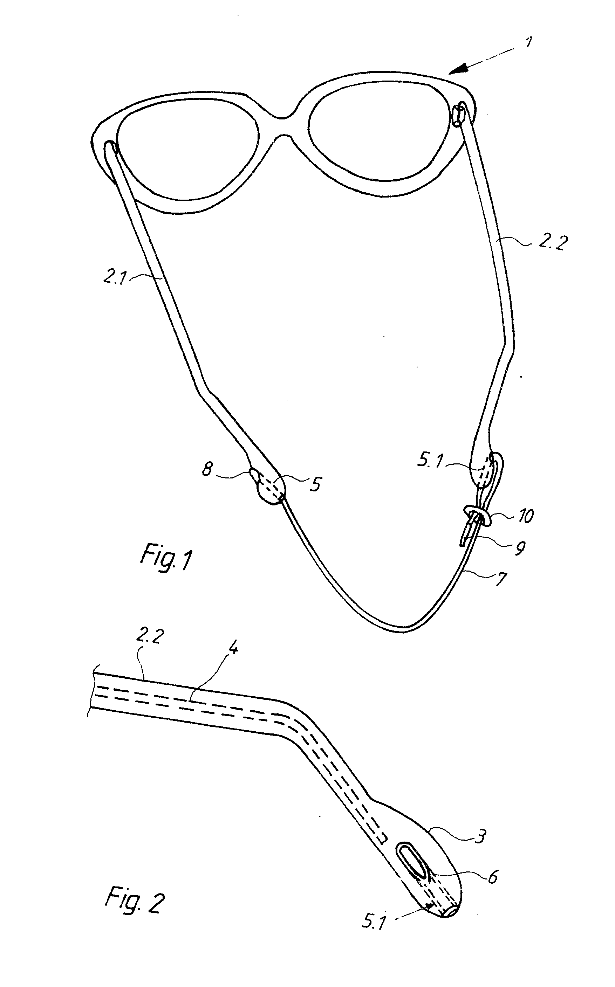

Im einzelnen zeigt die Fig. 1 das Brillengestell 1 mit dem Fassungsteil für beide Gläser sowie den Bügeln 2.1 und 2.2 Beide Bügel werden durch das Sicherungsband 7 mit einander verbunden, das in Gebrauchsstellung den Hinterkopf umschließt. Dieses Sicherungsband ist in einem der Bügel 2.1 durch eine beliebige Bohrung 5 geführt und legt sich mit seiner Endverstärkung 8 gegen das äußere Ende dieser Bohrung. Das äußere Ende der Bohrung kann entsprechend der Endverstärkung 8 zum Beispiel durch Ansenken geformt sein, so daß sich die Enderstärkung bündig in die Fläche des Bügels legt. Die Kraftübertragung erfolgt durch Abstützung der Endverstärkung 8 gegenüber dem Bügel 2.1. Der zweite Bügel 2.2 ist mit einer Bohrung 5.1 versehen, durch die das Sicherungsband selbsthemmend geführt ist. Es ist vorteilhaft diese Bohrung 5.1, die sich im wesentlichen in Längsrichtung des Bügels erstreckt, schräg in den Bügel zu führen, so daß sich das Sicherungsband unter Zug am Austrittswinkel der Bohrung selbstklemmend anlegen muß. Das freie Ende des Sicherungsbandes wird dabei von der Schlaufe 10 gehalten.

Die Fig. 2 zeigt das ohrseitige Ende des Bügels 2.2 mit der Metallverstärkung 4. Die sich im wesentlichen in Längsrichtung des zum Ohrstück 3 abgebogenen Bügels erstreckende längsbohrung 5.1 ist mit einer Hülse 6 ausgekleidet. Die durch die Bügelwand tretende Hülse ist dabei entsprechend dem Austrittswinkel schräg geschnit- und etwa tropfenförmig geformt. Das unter Zug stehende Ende des Sicherungsbandes ist entsprechend Fig. 1 geführt und wird bei dieser Ausbildung der Rohrungsöffnung in die als

Klemmkerbe wirkende « Tropfenspitze » gezogen.

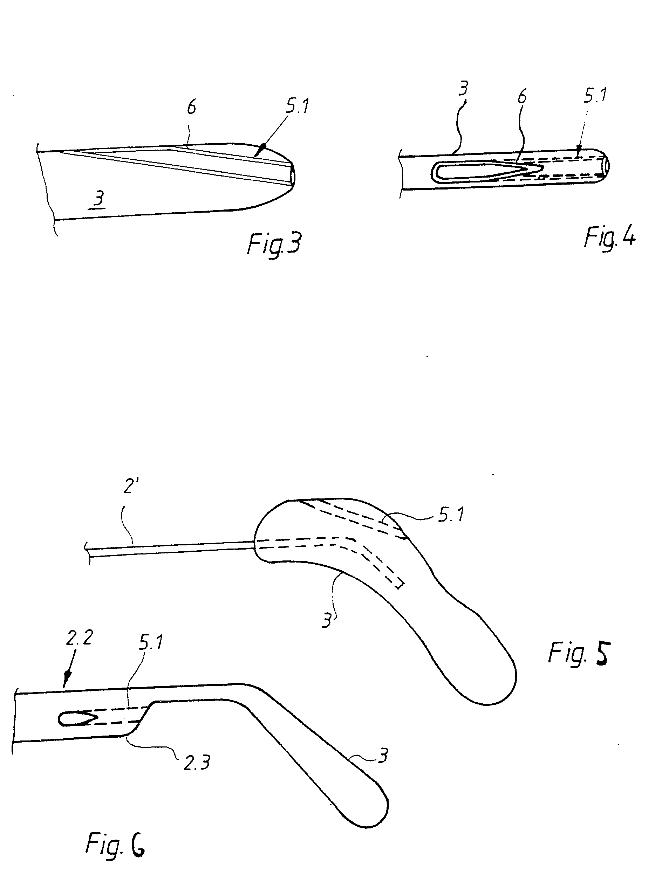

Die Fig. 3 zeigt einen Querschnitt durch das Ohrende 3 mit der Schrägbohrung 5.1 une eingesetzter Hülse 6 ; entsprechend dieser Darstellung zeigt die Fig. 4 eine Aufsicht auf das gleiche Ende. Bedingt durch den sehr kleiner Winkel zwischen der Längsachse des Ohrstücks 3 und der Bohrungsachse der Schrägbohrung 5.1 ist die Austrittsöffnung der Schrägbohrung erheblich vergrößert ; so ergibt sich hinreichend Raum zum Einklemmen des als elastische Schnur ausgebildeten Sicherungsbandes.

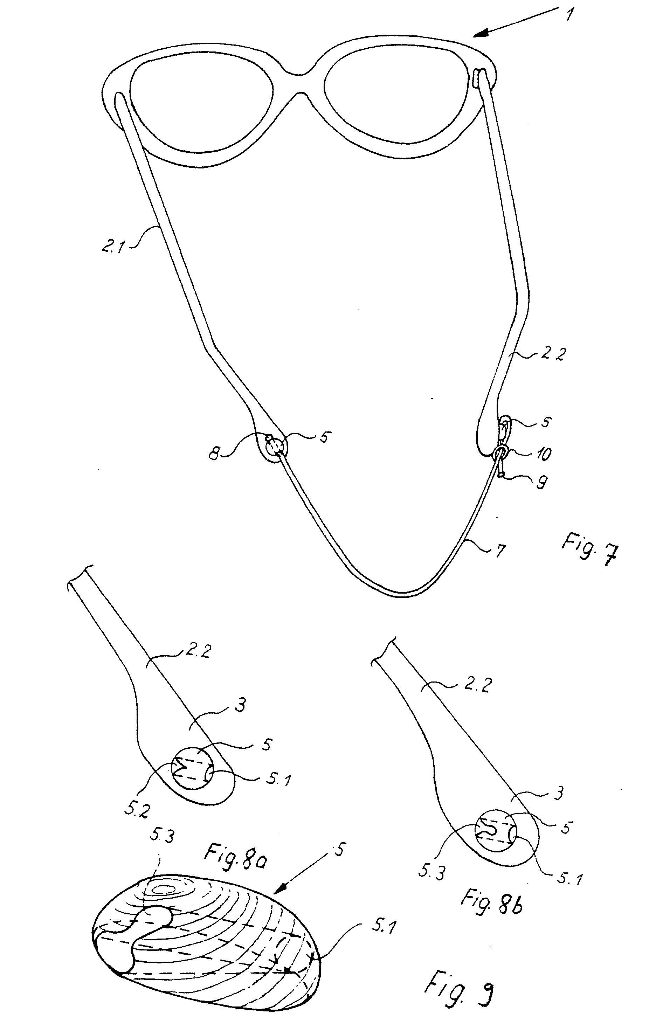

Die Fig. 5 zeigt eine mögliche Ausführungsform am Ohrstück 3 einer Metallbügelbrille, wobei der Metallbügel mit 2' ausgebildet ist. Hierbei ist die Schrägbohrung 5.1 in dem, dem ohrseitigen Ende abgewandten Teil des Ohrstücks 3 vorgesehen. Dadurch erfolgt der Zug etwa in Höhe und in Richtung des Bügels. Durch diese Anordnung wird eine günstige Kraftverteilung erreicht.

Schließlich zeigt die Fig. 6 einen Abschnitt des Bügels 2.2 mit ohrseitigem Ende 3, bei dem die Bügelverstärkung 2.3 zur Aufnahme der Schrägbohrung 5.1 ausgenutzt wird. Bei dieser Anordnung liegt die Schrägbohrung sehr genau in Bügelrichtung. Die angreifenden Kräfte, die in dieser Richtung wirken, werden so besonders gut auf das Brillengestell übertragen.

Es versteht sich von selbst, daß die Bohrung 5 im ersten Bügel 2.1 zur Aufnahme der Endverstärkung 8 zweckmäßigerweise analog zur Bohrung 5.1 im Bügel 2.2 angeordnet wird. Bei dieser Anordnung sind die Kraftangriffspunkte symmetrisch zum Nasenbügel, so daß die auftretenden Kräfte nicht Ursache eines ungewollten Verrutschens der Brille sein können.

Im einzelnen zeigt die Fig. 7 das Brillengestell 1 mit den beiden Bügeln 2.1 und 2.2, wobei jeder Bügel einen Vorsprung 5 aufweist, der mit der Bohrung 5.1 (Fig. 9) versehen ist. Das Sicherungsband 7 ist auf der einen Seite mit dem Kopf 8 festgelegt ; auf der anderen Seite ist es vom Ohrende her durch die Bohrung 5.1 im Vorsprung 5 geführt, umgelegt und schließlich durch die Schlaufe 10 gehalten. Auf dieser Seite findet die Klemmung statt.

## Patentansprüche

1. Brillengestell (1) mit an dessen Bügeln (2.1, 2.2) angreifendem, abnehmbaren, elastischen Sicherungsband (7), wobei jeder der beiden Bügel (2.1, 2.2) im Bereich des ohrseitigen Bügelendes (2.3) bzw. der ohrendenseitigen Verstärkung (3) Befestigungsmittel für das als elastische Schnur ausgebildete Sicherungsband (7) aufweist, dadurch gekennzeichnet, daß das Befestigungsmittel als im wesentlichen in Bügel-Längsrichtung verlaufende Bohrung ausgebildet ist, wobei die von der die Austrittsfläche durchdringenden Bohrung erzeugte Öffnung mindestens im zweiten Bügel (2.2) Tropfenform mit etwa parallel zum Bügel verlaufender Längsachse und zum Ohrende des Bügels (2.2) weisender Spitze aufweist und daß das Sicherungsband (7) eine zum Ohrende des Bügels hin geöffnete, im wesentlichen U-förmige Schlaufe bildend mit einem Ende durch die Bohrung (5.1) mit den Scheitel des U in der Spitze der Öffnung verklemmbar geführt ist.

2. Brillengestell nach Anspruch 1, dadurch gekennzeichnet, daß die Schrägbohrung (5.1) mit einer Hülse (6), vorzugsweise einer Metallhülse versehen ist.

3. Brillengestell nach Anspruch 1 oder 2, dadurch gekennzeichnet, daß jeder der beiden Bügel (2.1, 2.2) des Brillengestells (1) im Bereich der ohrseitigen Enden (3) eine auf der äußeren Seitenfläche des Ohrbügelendes (3) angeordnete Warze (5) aufweist, wobei die Warze (5) mit der das Sicherungsband aufnehmenden Bohrung (5.1) versehen ist, deren dem Brillengestell (1) zugewandte Öffnung klemmend mit dem Sicherungsband (7) zusammenwirkt.

4. Brillengestell nach Anspruch 3, dadurch gekennzeichnet, daß die Warze (5) der Kopf einer in das Ohrbügelende (3) eines jeden Bügels (2.1, 2.2) eingelassenen Niete, Schraube oder dergleichen ist.

5. Brillengestell nach Anspruch 3 oder 4, dadurch gekennzeichnet, daß der klemmend mit dem Sicherungsband (7) zusammenwirkende Lochrand der das Sicherungsband aufnehmenden Bohrung (5.1) einen etwa V-förmigen Einschnitt (5.2) aufweist.

6. Brillengestell nach Anspruch 3 oder 4, dadurch gekennzeichnet, daß der klemmend mit dem Sicherungsband (7) zusammenwirkende Lochrand (5.3) der das Sicherungsband aufnehmenden Bohrung (5.1) eine schlüssellochähnliche Form aufweist.

7. Brillengestell nach Anspruch 3 sowie einem der Ansprüche 4-6, dadurch gekennzeichnet, daß die Oberfläche des Vorsprungs (5) als Schmuckfacette ausgebildet ist.

8. Brillengestell nach Anspruch 1 sowie einem oder mehreren der vorstehenden Ansprüche, dadurch gekennzeichnet, daß eine das freie Ende des Sicherungsbandes (7) versteifende Spitze (9) vorgesehen ist.

9. Brillengestell nach Anspruch 8, dadurch gekennzeichnet, daß die versteifende Spitze (9) als das Ende des Sicherungsbandes (7) übergreifende Hülse, insbesondere als metallene Klemmhülse ausgebildet ist.

10. Brillengestell nach Anspruch 8 oder 9, dadurch gekennzeichnet, daß eine das freie Ende des Sicherungsbandes (7) aufnehmende Schlaufe (10) vorgesehen ist.

11. Brillengestell nach Anspruch 10, dadurch gekennzeichnet, daß die Schlaufe (10) auf dem zwischen den beiden Bügeln (2.1, 2.2) verlaufenden Teil des Sicherungsbandes (7) angeordnet ist.

12. Brillengestell nach Anspruch 10, dadurch gekennzeichnet, daß die Schlaufe (10) auf dem zweiten Bügel (2.2) auf der dem ohrseitigen Bügelende abgewandten Seite der Schrägbohrung (5.1) angeordnet ist.

## Claims

1. Spectacle frame (1) having a removable elastic safety band (7) being attached to the temples (2.1, 2.2) of the frame, each of the two temples (2.1, 2.2) being provided at their end region near the ear (2.3) resp. at the reinforcement of the temple end on the ear side, with fastening means for the safety band in the form of an elastic string, characterized in that the fastening part is formed as a hole elongating essentially along the longitudinal direction of the temple, whereby the opening being formed by the hole penetrating the exit surface at least in the second temple is of drop-shaped configuration, said opening having a longitudinal axis extending approximately parallel to the temple (2.2) and a pointing end directed towards the ear end of the temple (2.2) and that the safety band (7) forming essentially an U-shaped slide running open to the ear end of the temple being guided with one end in a clamping manner through the hole (5.1), the vertex of the U being located in the tip of the opening.

2. Spectacle frame according to claim 1, characterized in that the oblique hole (5.1) is equipped with a sleeve, preferably a sleeve made of metal.

3. Spectacle frame according to claim 1 or 2, characterized in that a projection (5) is provided on each of the two temples (2.1, 2.2) of the spectacle frame (1), these being arranged on the side surfaces in the region of the ear tab (3) of the temples and that each projection (5) is provided with a hole (5.1) whereby its orifice, facing the spectacle frame (1), interacts in a clamping manner with the safety band.

4. Spectacle frame according to claim 3, characterized in that the projection (5) is in the form of the head of a rivet, of a screw or of the like, whereby said alternative items are attached to the ear tab end (3) of each temple (2.1, 2.2).

5. Spectacle frame according to claims 3 or 4, characterized in that the safety band (7) clamping orifice of the hole containing that safety said safety band has the form of an about V-shaped section (5.2).

6. Spectacle frame according to claims 3 or 4, characterized in that the safety band (7) clamping orifice of the hole (5.3) containing said safety band has the form of a keyhole section.

7. Spectacle frame according to claim 3 and also to any one of claims 4 to 6, characterized in that the surfaces of the projections (5) are formed as ornamental facets.

8. Spectacle frame according to claim 1 and also to one or several of the preceding claims, characterized in that one of the safety band's free ends is provided with a stiffened reinforcement tip (9).

9. Spectacle frame according to claim 8, characterized in that the stiffened reinforced tip (9) is formed by a sleeve (7) surrounding the end of the safety band (7), particularly by a crimped metallic sleeve.

10. Spectacle frame according to claims 8 or 9, characterized in that a loop (10) is provided, in order to take-up the slack in the free end of the safety band (7).

11. Spectacle frame according to claim 10, characterized in that said loop (10) is arranged on the connecting portion of the safety band (7) between the two temples (2.1, 2.2).

12. Spectacle frame according to claim 10, characterized in that said loop (10) is arranged on the second temple (2.2), namely on the opposite side of the oblique hole (5.1) and of the ear end side of the temple end.

**Revendications**

1. Monture (1) de lunettes munie d'un cordon de sécurité (7) élastique, amovible et accroché aux branches (2.1, 2.2) de ladidte monture, chacune des deux branches (2.1, 2.2) comportant, au voisinage de l'extrémité (2.3) de la branche située du côté de l'oreille ou bien, respectivement, du renforcement (3) situé vers l'extrémité de l'oreille, des moyens de fixation du cordon de sécurité (7) réalisé en tant que cordelette élastique, caractérisée par le fait que le moyen de fixation est réalisé sous la forme d'un perçage s'étendant pour l'essentiel dans le sens longitudinal de la branche, l'ouverture créée par ce perçage au niveau de la face de sortie présentant, au moins dans la seconde branche (2.2), une forme de goutte avec un axe longitudinal s'étendant sensiblement parallèlement à la branche et une pointe tournée vers l'extrémité de la branche (2.2) située côté oreille ; et par le fait que le cordon de sécurité (7), formant une boucle sensiblement en U ouverte en direction de l'extrémité de la branche située côté oreille, est guidé à une extrémité avec faculté de coincement à travers le perçage (5.1), le sommet du U se trouvant dans la pointe de l'ouverture.

2. Monture de lunettes selon la revendication 1, caractérisée par le fait que le perçage oblique (5.1) est doté d'un fourreau (6), de préférence d'un fourreau métallique.

3. Monture de lunettes selon la revendication 1 ou 2, caractérisée par le fait que chacune des deux branches (2.1, 2.2) de cette monture (1) de lunettes présente, au voisinage des extrémités (3) situées côté oreille, un téton (5) disposé sur la surface latérale externe de l'extrémité (3) de la branche ce téton (5) étant pourvu du perçage (5.1) qui reçoit le cordon de sécurité, et dont l'ouverture tournée vers la monture (1) de lunettes coopère par coincement avec ce cordon de sécurité (7).

4. Monture de lunettes selon la revendication 3, caractérisée par le fait que le téton (5) constitue la tête d'un rivet, d'une vis ou d'un élément analogue encastré dans l'extrémité (3) de chacune des branches (2.1, 2.2).

5. Monture de lunettes selon la revendication 3 ou 4, caractérisée par le fait que l'embouchure du perçage (5.1) recevant le cordon de sécurité, associée par coincement à ce cordon de sécurité (7), comporte une encoche (5.2) sensiblement en forme de V.

6. Monture de lunettes selon la revendication 3 ou 4, caractérisée par le fait que l'embouchure (5.3) du perçage (5.1) recevant le cordon de sécurité, associée par coincement à ce cordon de sécurité (7), présente une forme analogue à un trou de serrure.

7. Monture de lunettes selon la revendication 3 ainsi que l'une des revendications 4-6, caractérisée par le fait que la face supérieure de la saillie (5) est réalisée sous la forme d'une facette décorative.

8. Monture de lunettes selon la revendication 1 ainsi que l'une ou plusieurs des revendications précédentes, caractérisée par le fait qu'il est prévu une pointe (9) rigidifiant l'extrémité libre du cordon de sécurité (7).

9. Monture de lunettes selon la revendication 8, caractérisée par le fait que la pointe de rigidification (9) est réalisée en tant que fourreau coiffant l'extrémité du cordon de sécurité (7), notamment en tant que fourreau métallique de serrage.

10. Monture de lunettes selon la revendication 8 ou 9, caractérisée par le fait qu'il est prévu un œillet (10) recevant l'extrémité libre du cordon de sécurité (7).

11. Monture de lunettes selon la revendication 10, caractérisée par le fait que l'œillet (10) est disposé sur la partie du cordon de sécurité (7) s'étendant entre les deux branches (2.1, 2.2).

12. Monture de lunettes selon la revendication 10, caractérisée par le fait que l'œillet (10) est disposé sur la seconde branche (2.2), du côté du perçage oblique (5.1) situé à l'opposé de l'extrémité de la branche située côté oreille.

Fig. 1

Fig. 2

Fig. 3

Fig. 4

Fig. 5

Fig. 6

Fig. 7

Fig. 8a

Fig. 8b

Fig. 9